# EUROPEAN PATENT SPECIFICATION

(11) **EP 0 576 096 B1**
(45) Date of publication and mention of the grant of the patent: **18.11.1998**
(21) Application number: 93201816.1
(22) Date of filing: 22.06.1993
(51) Int. Cl.: C01B 3/38, C01B 3/40

(54) **Process for the catalytic partial oxidation of hydrocarbons**
Verfahren zur katalytischen Kohlenwasserstoffteiloxidation
Procédé d'oxydation partielle catalytique d'hydrocarbures

(30) Priority: 24.06.1992 EP 92201879
(43) Date of publication of application: 29.12.1993
(73) Proprietor: SHELL INTERNATIONALE RESEARCH MAATSCHAPPIJ B.V., 2596 HR Den Haag (NL)
(72) Inventor: Vonkeman, Koert Alexander, NL-1031 CM Amsterdam (NL); Jacobs, Ludovicus Leonardus Gerardus, NL-1031 CM Amsterdam (NL)

(56) References cited:
- EP-A- 0 303 438
- GB-A- 2 239 406
- US-A- 4 522 894
- CATALYSIS LETTERS vol. 6 , 1990 , BASEL CH pages 181 - 186 P.D.F. VERNON ET AL. 'Partial oxidation of methane to synthesis gas'
- CHEMICAL ENGINEERING SCIENCE vol. 45, no. 8 , 1990 , OXFORD, GB pages 2407 - 2413 R.F.BLANKS ET AL. 'Bidirectional adiabatic synthesis gas generator'
- APPLIED CATALYSIS B: ENVIRONMANTAL vol. 1, no. 2 , 26 June 1992 , AMSTERDAM, NL pages 89 - 100 J.K. HOCHMUTH 'Catalytic partial oxidation of methane over a monolith supported catalyst'

## Description

The present invention relates to a process for the catalytic partial oxidation of hydrocarbons, in particular a process for the preparation of a mixture of carbon monoxide and hydrogen from methane, natural gas, associated gas or other sources of light hydrocarbons.

The partial oxidation of hydrocarbons, for example methane or natural gas, in the presence of a catalyst is an attractive route for the preparation of mixtures of carbon monoxide and hydrogen, which mixtures are known in the art as synthesis gas. The synthesis gas so-produced may be converted into valuable products, for example hydrocarbon fuels boiling in the middle distillate range, prepared by means of the Fischer-Tropsch synthesis, hydrocarbon waxes, lubricating base oils or methanol.

The optimum catalytic partial oxidation process would give high yields of carbon monoxide and hydrogen at elevated pressures, for example above 30 bar, and very high space velocities, for example of the order of 100,000 Nl/l/h. For thermodynamic reasons, in order to obtain high yields of carbon monoxide and hydrogen, it is necessary to operate the partial oxidation process at high temperatures. However, it has been found very difficult to avoid excessively high peak temperatures occurring, typically in excess of 1200°C, which peak temperatures are undesirable in a commercial reactor. Accordingly, there exists a need for a partial oxidation process having a high selectivity for the production of carbon monoxide and hydrogen under conditions of high throughput which avoids the occurrence of high peak temperatures.

A number of processes and operating schemes for catalytic partial oxidation have been proposed. Thus, Lapszewicz, J.A. et al., Symposium on Natural Gas upgrading II presented before The Division of Petroleum Chemistry, Inc. American Chemical Society, San Francisco Meeting, 5th to 10th April, 1992, disclose details of laboratory scale experiments in which a single pass reactor packed with a catalyst having an undisclosed composition was operated in an isothermal mode for the catalytic partial oxidation of methane using air. It is reported that yields of carbon monoxide were achieved which exceeded those achievable under conditions of thermodynamic equilibrium. However, operation of a commercial scale reactor under isothermal conditions presents complicated operational problems and is preferably avoided.

Blanks, R.F. et al., Chemical Engineering Science, Vol. 45, No. 8, pages 2407 to 2413, 1990, disclose a process for the preparation of synthesis gas by the catalytic partial oxidation of natural gas with air. The process employs a bidirectional adiabatic reactor operated in a cyclic manner in which the gas flows are periodically reversed in order to maintain a high operating temperature. However, this cyclic mode of operation results in the reactor being maintained in an unsteady state. Such a process could present operational problems if operated on a commercial scale.

European Patent Application publication No. 0 303 438 (EP-A-0 303 438) discloses a process for the catalytic partial oxidation of a hydrocarbonaceous feedstock in which a gaseous mixture of the hydrocarbonaceous feedstock, oxygen or an oxygen-containing gas and, optionally, steam, is introduced into a catalytic partial oxidation zone to contact a catalyst retained therein, which catalyst has a surface area to volume ratio of at least 5 cm²/cm³. The catalytic partial oxidation zone is insulated against heat loss by a number of layers of castable insulation material. The catalyst employed in the process may comprise a wide range of catalytically active components, for example palladium, platinum, rhodium, iridium, osmium, ruthenium, nickel, chromium cobalt, cerium, lanthanum and mixtures thereof. Further, it is stated in EP-A-0 303 438 that materials not normally considered to be catalytically active may also be employed as catalysts, for example refractory oxides such as cordierite, mullite, mullite aluminium titanate, zirconia spinels and alumina. The catalyst may be of a variety of forms, for example sheets of corrugated metal packed to form elongate channels therethrough or wire mesh. However, preference is given in EP-A-0 303 438 to the use of catalysts in the form of monoliths.

The Example of EP-A-0 303 438 is concerned with a catalytic partial oxidation reactor in which a series of nine spaced apart catalyst discs are employed, each disc comprising a honeycomb monolith of thickness 10 inches (0.25 metres). The reactor was operated using a feed comprising natural gas (>95% methane) and steam at various steam to carbon ratios, at a gas space velocity of 97,000 hr⁻¹ and at temperatures of 870 °C, 950 °C and 1040 °C. The honeycomb monolith catalyst structure is required in order to provide a reactor having a sufficiently low pressure drop across the catalyst to allow the very high space velocities demanded by the process to be achieved. However, such a reactor is expensive to construct and operate and is undesirable on a commercial scale.

U.K. Patent Application Publication No. 2 239 406 (GB 2 239 406 A) discloses a process for the catalytic partial oxidation of methane under relatively mild operating conditions of temperature and pressure. Suitable operating conditions are described in GB 2 239 406 A as being from 650 to 900 °C and from 10 to 600 kPa. The catalyst employed in the process of GB 2 239 406 A comprised a d-block transition metal supported as a refractory support. The catalyst was retained in a fixed arrangement as a powdered solid between plugs of silica wool.

J.K. Hochmuth ("Catalytic partial oxidation of methane over a monolith supported catalyst"; Applied Catalysis B: Environmental, 1 (1992) 89-100) describes experiments conducted to investigate the catalytic partial oxidation of methane over a monolithic supported catalyst to produce synthesis gas. The catalyst employed comprised platinum and palladium supported as a cordierite monolith body retained in a fixed arrangement.

An attractive process regime would be one in which the feed gases are contacted with a particulate catalyst retained in a fixed bed within a reactor. Such a regime is well known for application in a wide range of processes. However, to date it has not been possible to employ such a reactor on a commercial scale for the steady state catalytic partial oxidation of a hydrocarbon as the volume of catalyst required in the fixed bed has resulted in a high pressure drop across the bed, which in turn has prevented the very high gas space velocities required for operation from being achieved.

Most surprisingly, it has now been found possible to conduct the catalytic partial oxidation of a hydrocarbon feedstock using a catalyst bed having a high tortuosity, such as a fixed bed of particulate catalyst, a ceramic foam or an irregularly stacked bed of gauzes, at the very high space velocities required if a specific set of process parameters are met. Further, it has advantageously been found that operation under the aforementioned set of process parameters allows both carbon monoxide and hydrogen to be prepared in very high yields without the occurrence of high peak temperatures.

Accordingly, the present invention provides a process for the catalytic partial oxidation of a hydrocarbon feedstock, which process comprises contacting a feed comprising the hydrocarbon feedstock and an oxygen-containing gas at an oxygen-to-carbon molar ratio in the range of from 0.45 to 0.75, at elevated pressure and space velocity of the feed in the range of from 20,000 to 50,000,000 Nl/l/hr, with a catalyst in a reaction zone, which catalyst comprises a metal selected from Group VIII of the Periodic Table supported on a carrier and which catalyst is retained within the reaction zone in a fixed arrangement having a tortuosity of at least 1.3, tortuosity being defined as the ratio of the length of the path followed by a gas flowing through the bed to the length of the shortest straight line path through the bed, wherein the feed is preheated prior to contacting the catalyst and wherein the reaction zone is under adiabatic conditions.

The process of the present invention may be used to prepare a mixture of carbon monoxide and hydrogen from any gaseous or hydrocarbon feedstock having a low boiling point. The process is particularly suitable for the partial oxidation of methane, natural gas, associated gas or other sources of light hydrocarbons.

The hydrocarbon feedstock is reacted with an oxygen-containing gas. Air is suitable for use as the oxygen-containing gas. Preferably, substantially pure oxygen is used as the oxygen-containing gas. In this way, the need for handling a large volume of inert gas, for example nitrogen when using air as the oxygen-containing gas, is avoided. The feed may optionally comprise steam.

The feed comprises the hydrocarbon feedstock and the oxygen-containing gas in an amount to give an oxygen-to-carbon ratio in the range of from 0.45 to 0.75. References to the oxygen-to-carbon ratio refer to the ratio of oxygen in the form of molecules (O2) to carbon atoms present in the hydrocarbon feedstock. Preferably, the oxygen-to-carbon ratio is in the range of from 0.45 to 0.65, with oxygen-to-carbon ratios of about the stoichiometric ratio, 0.5, being especially preferred. If steam is present in the feed, the steam-to-carbon ratio is preferably in the range of from above 0.0 to 3.0, more preferably from 0.3 to 2.0.

The feed is contacted with a catalyst under adiabatic conditions. For the purposes of this specification, the term "adiabatic" is a reference to reaction conditions in which substantially all heat loss and radiation from the catalyst bed is prevented, with the exception of heat leaving in the gaseous effluent stream of the reactor.

It has been found that adiabatic operation of the reactor is necessary in order to avoid the occurrence of excessively high peak temperatures in the catalyst bed. Most surprisingly, it has been found that if heat, in particular in the form of radiation or convection via the wall of the reactor, is allowed to leave the catalyst bed, the operating temperature of the catalyst bed is caused to rise and the selectivity of the process to hydrogen and carbon monoxide to fall. Conversely, it has been found that if the reactor is operated adiabatically, as hereinbefore defined, the operating temperature of the catalyst bed is lowered and the selectivity of the reaction to carbon monoxide and hydrogen increases.

The partial oxidation of the hydrocarbon feedstock is effected in the presence of a catalyst, which catalyst comprises as a catalytically active component a metal from Group VIII of the Periodic Table of the Elements. Preferred catalysts for use in the process comprise one or more metals selected from ruthenium, rhodium, palladium, osmium, iridium and platinum, with catalysts comprising one or more metals selected from iridium, platinum, rhodium and ruthenium being especially preferred. A catalyst comprising rhodium is a most suitable catalyst for use in the process of the present invention.

The catalyst comprises the catalytically active component supported on a carrier and retained in the reaction zone of the reactor in an arrangement having a high tortuosity. Catalyst structures such as the honeycomb monoliths of the prior art are structures having a low tortuosity and are not suitable for use in the process of the present invention. The term "high tortuosity" as used in the present specification is a reference to materials or arrangements having a tortuosity substantially greater than that of the aforementioned monolith structures and the term is to be construed accordingly. Examples of structures or arrangements having a high tortuosity are fixed beds of particulate catalyst, metal gauzes and ceramic foams. Extruded monolith materials may be used in the process of the present invention, if arranged to form a structure having a high tortuosity. In such an arrangement, pieces or layers of the monolith are arranged so as to break up and interrupt the elongate channels present in the material when formed, thereby significantly increasing the tortuosity of the structure. A fixed bed of a particulate catalyst is a one suitable arrangement for use in the process of this invention. A fixed bed comprising a catalytically active metal supported on a ceramic foam carrier is an alternative and most suitable configuration for use in the process of this invention.

The term "tortuosity" is a common term in the art which, when referring to a fixed catalyst bed can defined as the ratio of the length of the path followed by a gas flowing through the bed to the length of the shortest straight line path through the bed. Thus, the honeycomb monolith structures of the prior art have a tortuosity of 1.0. The fixed arrangement of the process of this invention should have a high tortuosity, that is a tortuosity of at least 1.3. A fixed bed of particles typically has a tortuosity of about 1.5, whilst ceramic foam supports may be prepared having a tortuosity of the order of 3.0 to 4.0, or even higher. In general, the tortuosity of the fixed bed arrangement of the present process is in the range of from 1.3 to about 10.0, more preferably to about 5.0. A most suitable range of tortuosity is from 1.3 to 4.0.

The catalyst comprises a carrier. The metal of the metal gauze or the ceramic material of the ceramic foams may be used as the carrier for the catalytically active components of the catalyst. Suitable carrier materials for use in preparing the particulate catalyst are well known in the art and include the refractory oxides such as silica, alumina, titania, zirconia and mixtures thereof. A most preferred carrier material for the particulate catalyst is alumina, in particular alpha-alumina. The catalytically active component may be deposited on the carrier by techniques well known in the art. A most suitable method for depositing the catalytically active component on the carrier material of the particulate catalyst is impregnation. The ceramic foams useful as supports for the catalytically active metal may be prepared from the aforementioned refractory oxides, typically alumina and are available commercially. Suitable ceramic foams are, for example those having from 30 to 150 pores per inch (12 to 60 pores per centimetre). Impregnation is a most suitable method for depositing the catalytically active metal into the ceramic foam carrier.

The combination of process features discussed hereinbefore allows a fixed catalyst bed of low volume to be employed, in turn allowing the very high space velocities demanded by a commercial catalytic partial oxidation process to be applied. Typical gas space velocities are in the range of from 20,000 to 50,000,000 Nl/L/hr, more preferably in the range of from 50,000 to 10,000,000 Nl/l/hr. Space velocities of the order of 1,000,000 Nl/l/hr are typical for the process of this invention.

Typically, operating pressures of up to 100 bar may be applied in the process, more preferably in the range of from 2 to 75 bar.

The feed is contacted with the catalyst at elevated temperatures. Operating temperatures for the partial oxidation are in the range of from 750 to 1200°C, with temperatures in the range of from 1000 to 1200°C being typical. Advantageously, the feed is preheated prior to contacting the catalyst. It is a further advantage of the process of this invention that, by allowing the very high gas space velocities mentioned hereinbefore to be applied, it is not necessary to limit the preheating of the feed to ensure that the autoignition temperature of the feed mixture is exceeded prior to the feed contacting the catalyst. It is sufficient to allow the components of the feed to mix prior to contacting the catalyst, whilst ensuring that the feed, once fully mixed, contacts the catalyst before the autoignition delay time elapses.

In a further aspect, the present invention relates to carbon monoxide or hydrogen whenever prepared by a process as hereinbefore described.

The process of the present invention is further described by way of the following illustrative examples, in which Examples 1, 2 and 4 exemplify a process according to the present invention and Examples 3 and 5 are comparative examples.

### Example 1

### Catalyst Preparation

A platinum/alpha-alumina catalyst was prepared by impregnating a commercially available, particulate alpha-alumina carrier with an aqueous solution of chloroplatinic acid (H₂PtCl₆), followed by drying and calcining the impregnated material. The catalyst comprised 0.5% wt platinum.

### Catalytic Partial Oxidation

A reactor was constructed comprising a transparent sapphire tube mounted concentrically within an outer transparent polycarbonate tube. A radiation impermeable, platinum foil was placed around the inner sapphire tube. The catalyst was loaded into the inner sapphire tube. The catalyst was retained in the form of a fixed bed of catalyst particles having a tortuosity of 1.5. Methane and oxygen, in sufficient amounts to give an oxygen-to-carbon ratio of 0.5, were fed to the reactor and thoroughly mixed just prior to being introduced into the reactor at a pressure of 2 bar and a gas hourly space velocity (GHSV) of 900,000 Nl/l/hr. The feed had a residence time in the catalyst bed of 8 milliseconds.

The composition of the gas mixture leaving the reactor was determined by gas chromatography. The operating temperature of the reactor was determined by optical pyrometry. The operating conditions of the reactor and the results of the experiment are summarised in Table I hereinbelow.

### Example 2

The experiment of Example 1 was repeated using the same general method. The operating conditions of the reactor and the results are set out in Table I hereinbelow.

### Example 3 - Comparative Example

For comparison purposes, the experiment of Example 1 was repeated, but with the omission of the platinum foil. The operating conditions and the results of this comparative experiment are set out in Table I hereinbelow.

### Example 4

### Catalyst Preparation

A rhodium/alpha-alumina catalyst was prepared by impregnating a commercially available, particulate alpha-alumina carrier with an aqueous solution of rhodium chloride (RhCl₃), followed by drying and calcining the impregnated material. The completed catalyst comprised 5.0% wt rhodium.

### Catalytic Partial Oxidation

The rhodium-containing catalyst was retained as a fixed bed of particles having a tortuosity of 1.5 and applied in the catalytic partial oxidation of methane using the general procedure described in Example 1. The operating conditions of the reactor and the results of the experiment are summarised in Table II hereinbelow.

### Example 5 - Comparative Example

For comparison purposes, the experiment of Example 4 was repeated, but with the omission of the platinum foil. The operating conditions and the results of this comparative experiment are set out in Table II hereinbelow.

From the data presented in Table I, it can be seen that, when employing the platinum-containing catalyst, operation of the reactor under adiabatic conditions, that is with the platinum foil in place, resulted in a significantly lower operating temperature for the catalyst bed. Further, it can be seen that the overall conversion of methane and the selectivity of the process to both carbon monoxide and hydrogen increased significantly.

From the data presented in Table II, it can be seen that a similar pattern with respect to the methane conversion and the selectivity of the process to both hydrogen and carbon monoxide resulted when the rhodium-containing catalyst was employed. The rhodium catalyst exhibited a greater intrinsic activity in the catalytic partial oxidation reactions than the platinum catalyst, resulting in an overall conversion and selectivity much closer to that expected at thermodynamic equilibrium. However, a significant increase in the conversion and selectivity of the process was still observed when employing the rhodium-containing catalyst under adiabatic conditions.

**Table I**

| | Example 1 | Example 2 | Example 3 (Comparative) |
|---|---|---|---|
| | | | |

| Operating Conditions | | | |
|---|---|---|---|
| Temperature (°C) | 850 | 860 | 1150 |
| Pressure (bar) | 2 | 3 | 2 |
| GHSV (Nl/l/hr) | 900,000 | 900,000 | 900,000 |
| Oxygen/Carbon ratio | 0.5 | 0.5 | 0.5 |

| Reactor Outlet Gas Composition | | | |
|---|---|---|---|
| CH₄ (%) | 22 | 20 | 31 |
| CO (%) | 34 | 34 | 28 |
| CO₂ (%) | 5 | 6 | 7 |
| H₂ (%) | 31 | 35 | 15 |
| H₂O (%) | 8 | 6 | 20 |
| CH₄ conversion (%) | 64 | 67 | 53 |
| O₂ conversion (%) | 100 | 100 | 100 |
| CO selectivity (%) ¹ | 87 | 85 | 80 |
| H₂ selectivity (%) ² | 79 | 86 | 43 |

| | | | |
|---|---|---|---|
| 1 selectivity to CO based on CH₄ conversion | | | |
| 2 selectivity to H₂ based on CH₄ conversion | | | |

**Table II**

| | Example 4 | Example 5 (Comparative) |
|---|---|---|
| | | |

| Operating Conditions | | |
|---|---|---|
| Temperature (°C) | # | 950 |
| Pressure (bar) | 1.75 | 1.75 |
| GHSV (Nl/l/hr) | 1,000,000 | 900,000 |
| Oxygen/Carbon ratio | 0.61 | 0.61 |
| CH₄ conversion (%) | 98.3 | 97.2 |
| O₂ conversion (%) | 100 | 100 |
| CO selectivity (%) ¹ | 94.0 | 93.5 |
| H₂ selectivity (%) ² | 93.4 | 93.3 |
| # temperature determined by inspection to be substantially below 950 °C. | | |

| | | |
|---|---|---|
| 1 selectivity to CO based on CH₄ conversion | | |
| 2 selectivity to H₂ based on CH₄ conversion | | |

## Claims

1. A process for the catalytic partial oxidation of a hydrocarbon feedstock, which process comprises contacting a feed comprising the hydrocarbon feedstock and an oxygen-containing gas at an oxygen-to-carbon molar ratio in the range of from 0.45 to 0.75, at elevated pressure and space velocity of the feed in the range of from 20,000 to 50,000,000 Nl/l/hr, with a catalyst in a reaction zone, which catalyst comprises a metal selected from Group VIII of the Periodic Table supported on a carrier and which catalyst is retained within the reaction zone in a fixed arrangement having a tortuosity of at least 1.3, tortuosity being defined as the ratio of the length of the path followed by a gas flowing through the bed to the length of the shortest straight line path through the bed, wherein the feed is preheated prior to contacting the catalyst and wherein the reaction zone is under adiabatic conditions.

2. A process according to claim 1, characterised in that the hydrocarbon feedstock comprises methane, natural gas, associated gas or a source of light hydrocarbons.

3. A process according to either of claims 1 or 2, characterised in that the oxygen-containing gas is substantially pure oxygen.

4. A process according to any preceding claim, characterised in that the feed comprises the hydrocarbon feedstock and the oxygen-containing gas in amounts giving an oxygen-to-carbon ratio of from 0.45 to 0.65, preferably about 0.5.

5. A process according to any preceding claim, characterised in that the feed additionally comprises steam, preferably at a steam-to-carbon ratio of from above 0.0 to 3.0, more preferably from 0.3 to 2.0.

6. A process according to any preceding claim, characterised in that the catalyst comprises a metal selected from ruthenium, rhodium, palladium, osmium, iridium and platinum, preferably selected from platinum, palladium, rhodium and ruthenium.

7. A process according to any preceding claim, characterised in that the fixed arrangement of the catalyst is in a form selected from a fixed bed of a particulate catalyst, a metal gauze and a ceramic foam, preferably a fixed bed of a particulate catalyst or a ceramic foam.

8. A process according to any preceding claim, characterised in that the fixed arrangement has a tortuosity in the range of from 1.3 to 10.0, preferably from 1.3 to 4.0.

9. A process according to any preceding claim, characterised in that the space velocity of the feed is in the range of from 50,000 to 10,000,000 Nl/l/hr.

10. A process according to any preceding claim, characterised in that the feed is supplied at a pressure in the range of up to 100 bar, preferably from 2 to 75 bar.

## Patentansprüche

1. Verfahren zur katalytischen Partialoxidation eines Kohlenwasserstoffeinsatzmaterials, welches Verfahren das Inkontaktbringen einer das Kohlenwasserstoffeinsatzmaterial und ein sauerstoffhältiges Gas umfassenden Einspeisung mit einem Molverhältnis Sauerstoff zu Kohlenstoff im Bereich von 0,45 bis 0,75 bei einem erhöhten Druck und einer Raumgeschwindigkeit der Einspeisung im Bereich von 20.000 bis 50.000.000 Nl/l/h, mit einem Katalysator in einer Reaktionszone umfaßt, welcher Katalysator ein aus der Gruppe VIII des Periodensystems ausgewähltes Metall umfaßt, das auf einem Träger aufgebracht ist, und welcher Katalysator in der Reaktionszone in einer starren Anordnung gehalten wird, die eine Tortuosität von mindestens 1,3 aufweist, wobei die Tortuosität als das Verhältnis der Weglänge definiert wird, die vom Gasstrom durch das Bett entlang der kürzesten geraden Wegstrecke durch das Bett zurückgelegt wird, wobei die Einspeisung vor dem Inkontaktbringen des Katalysators vorerhitzt wird und worin die Reaktionszone unter adiabatischen Bedingungen steht.

2. Verfahren nach Anspruch 1, dadurch gekennzeichnet, daß das Kohlenwasserstoffeinsatzmaterial Methan, Erdgas, Begleitgas oder eine Quelle von leichten Kohlenwasserstoffen umfaßt.

3. Verfahren nach Anspruch 1 oder 2, dadurch gekennzeichnet, daß das sauerstoffhältige Gas im wesentlichen reiner Sauerstoff ist.

4. Verfahren nach einem der vorstehenden Ansprüche, dadurch gekennzeichnet, daß die Einspeisung das Kohlenwasserstoffeinsatzmaterial und das sauerstoffhältige Gas in Mengen umfaßt, die ein Verhältnis von Sauerstoff zu Kohlenstoff von 0,45 bis 0,65, vorzugsweise von etwa 0,5, ergeben.

5. Verfahren nach einem der vorstehenden Ansprüche, dadurch gekennzeichnet, daß die Einspeisung zusätzlich Dampf, vorzugsweise in einem Verhältnis Dampf zu Kohlenstoff von etwa 0,0 bis 3,0, stärker bevorzugt von 0,3 bis 2,0, umfaßt.

6. Verfahren nach einem der vorstehenden Ansprüche, dadurch gekennzeichnet, daß der Katalysator ein unter Ruthenium, Rhodium, Palladium, Osmium, Iridium und Platin, vorzugsweise unter Platin, Palladium, Rhodium und Ruthenium, ausgewähltes Metall umfaßt.

7. Verfahren nach einem der vorstehenden Ansprüche, dadurch gekennzeichnet, daß die starre Anordnung des Katalysator in einer Form vorliegt, die unter einem Festbett aus teilchenförmigem Katalysator, einer Metallgaze und einem keramischen Schaum ausgewählt ist, vorzugsweise ein Festbett aus teilchenförmigem Katalysator oder ein keramischer Schaum ist.

8. Verfahren nach einem der vorstehenden Ansprüche, dadurch gekennzeichnet, daß die starre Anordnung eine Tortuosität im Bereich von 1,3 bis 10,0, vorzugsweise von 1,3 bis 4,0, aufweist.

9. Verfahren nach einem der vorstehenden Ansprüche, dadurch gekennzeichnet, daß die Raumgeschwindigkeit der Einspeisung im Bereich von 50.000 bis 10.000.000 Nl/l/h liegt.

10. Verfahren nach einem der vorstehenden Ansprüche, dadurch gekennzeichnet, daß die Einspeisung bei einem Druck im Bereich von bis zu 100 bar, vorzugsweise von 2 bis 75 bar, zugeführt wird.

## Revendications

1. Procédé d'oxydation partielle catalytique d'une charge de base hydrocarbonée, conformément auquel on met en contact une charge constituée de la charge de base hydrocarbonée et d'un gaz contenant de l'oxygène, à un rapport molaire oxygène à carbone qui varie de 0,45 à 0,75, sous pression élevée et à une vitesse spatiale de la charge qui varie de 20.000 à 50.000.000 litres normaux/l/h, avec un catalyseur dans une zone de réaction, lequel catalyseur comprend un métal choisi parmi les éléments du groupe VIII du tableau périodique, porté par un support et lequel catalyseur est retenu dans la zone de réaction selon un agencement fixe, possédant une tortuosité d'au moins 1,3, la tortuosité étant définie par le rapport de la longueur du trajet suivi par le gaz s'écoulant à travers le lit à la longueur de trajet en ligne droite le plus court à travers le lit, où la charge est préchauffée avant son entrée en contact avec le catalyseur et où la zone de réaction se trouve dans des conditions adiabatiques.

2. Procédé suivant la revendication 1, caractérisé en ce que la charge de départ hydrocarbonée comprend du méthane, du gaz naturel, du gaz associé, ou une source d'hydrocarbures légers.

3. Procédé suivant l'une quelconque des revendications 1 et 2, caractérisé en ce que le gaz contenant de l'oxygène est de l'oxygène sensiblement pur.

4. Procédé suivant l'une quelconque des revendications précédentes, caractérisé en ce que la charge comprend la charge de départ hydrocarbonée et le gaz contenant de l'oxygène en proportions qui donnent un rapport oxygène à carbone de 0,45 à 0,65, de préférence, d'environ 0,5.

5. Procédé suivant l'une quelconque des revendications précédentes, caractérisé en ce que la charge comprend en outre de la vapeur d'eau, de préférence, en un rapport vapeur d'eau à carbone supérieur à 0,0 jusqu'à 3,0, plus avantageusement, de 0,3 à 2,0.

6. Procédé suivant l'une quelconque des revendications précédentes, caractérisé en ce que le catalyseur comprend un métal choisi parmi le ruthénium, le rhodium, le palladium, l'osmium, l'iridium et le platine, mais choisi, de préférence, parmi le platine, le palladium, le rhodium et le ruthénium.

7. Procédé suivant l'une quelconque des revendications précédentes, caractérisé en ce que l'agencement fixe du catalyseur se présente sous une forme choisie parmi un lit fixe d'un catalyseur particulaire, une gaze de métal et une mousse céramique, de préférence, un lit fixe de catalyseur particulaire, ou une mousse céramique.

8. Procédé suivant l'une quelconque des revendications précédentes, caractérisé en ce que l'agencement fixe possède une tortuosité qui varie de 1,3 à 10,0, de préférence, de 1,3 à 4,0.

9. Procédé suivant l'une quelconque des revendications précédentes, caractérisé en ce que la vitesse spatiale de la charge varie de 50.000 à 10.000.000 litres normaux/l/h.

10. Procédé suivant l'une quelconque des revendications précédentes, caractérisé en ce que l'on fournit la charge sous une pression qui s'étend dans une plage allant jusqu'à 100 bars, de préférence, de 2 à 75 bars.
